# EUROPÄISCHE PATENTANMELDUNG

(11) **EP 1 672 453 A1**
(43) Veröffentlichungstag der Anmeldung: **21.06.2006**
(21) Anmeldenummer: 04029098.3
(22) Anmeldetag: 08.12.2004
(51) Int. Cl.: G05B 23/02

(54) **Verfahren zur Validierung von Referenzwerten in Analysesystemen**

(71) Anmelder: SIEMENS AKTIENGESELLSCHAFT, 80333 München (DE)
(72) Erfinder: Lauchstedt, Lutz, 91058 Erlangen (DE)

(57) **Zusammenfassung**

Ein Verfahren zur Validierung von Referenzwerten in Analysesystemen soll mit geringem Aufwand durchführbar sein und eine zuverlässige Beurteilung der Qualität der ermittelten Referenzwerte erlauben. Dazu werden die Referenzwerte in einer Selbstlernphase des Systems ermittelt, wobei die Selbstlernphase wiederholt durchgeführt wird und alle ermittelten Referenzwerte zur Beurteilung der Qualität eines Referenzwertes herangezogen werden.

## Beschreibung

Die Erfindung bezieht sich auf ein Verfahren zur Validierung von Referenzwerten in Analysesystemen.

Bei verschiedenartigen technischen Anwendungen werden Referenzwerte benötigt. Beispielsweise muss häufig das Betriebsverhalten einer Maschine anhand von Referenzwerten überwacht werden. Die Referenzwerte sind dabei vorgegebene Sollwerte für verschiedene Betriebsparameter der Maschine, mit denen gemessene Istwerte verglichen werden können. Dabei sollen Ereignisse, die auf Störungen jeglicher Art beruhen, erkannt, also von einem typischen Betriebsverhalten der Maschine unterschieden und angezeigt werden.

Um eine zuverlässige Erkennung solcher Ereignisse zu gewährleisten, müssen die Referenzwerte, die zur Beurteilung des Betriebsverhaltens herangezogen werden, aussagekräftig sein. Ihre Qualität ist entscheidend für die wirksame Überwachung des Betriebsverhaltens der Maschine.

Referenzwerte können beispielsweise in einer Selbstlernphase des Analysesystems erhalten werden. Die Qualität der so ermittelten Referenzwerte ist jedoch schwer zu beurteilen, weil eine verlässliche Berurteilungsgrundlage fehlt. Bei Zweifeln an der Qualität der Referenzwerte können diese verworfen und die Selbstlernphase erneut gestartet werden. Diese Vorgehensweise produziert zwar neue Referenzwerte, löst das Problem der Beurteilung der Referenzwerte jedoch nicht, denn auch die neuen Referenzwerte müssen wieder beurteilt werden.

Zur Validierung der Referenzwerte wird daher die Selbstlernphase des Systems üblicherweise manuell auf eine Vergleichbarkeit zu einem typischen Betriebsverhalten überprüft. Dieses Vorgehen ist jedoch sehr zeitaufwendig.

Der Erfindung liegt daher die Aufgabe zugrunde, ein Verfahren zur Validierung von Referenzwerten in Analysesystemen anzugeben, das mit geringem Aufwand durchführbar ist und eine zuverlässige Beurteilung der Qualität der ermittelten Referenzwerte erlaubt.

Diese Aufgabe wird erfindungsgemäß dadurch gelöst, dass die Referenzwerte in einer Selbstlernphase des Systems ermittelt werden, wobei die Selbstlernphase-wiederholt durchgeführt wird und alle ermittelten Referenzwerte zur Beurteilung der Qualität eines Referenzwertes herangezogen werden.

Die Erfindung geht dabei von der Überlegung aus, dass das Verwerfen von Referenzwerten stets mit einem Verlust von Informationen verbunden ist. Wegen der schwer zu beurteilenden Qualität der Referenzwerte ist jedoch auch der Wert der verlorenen Information schwer zu beurteilen. Anstatt die Referenzwerte zu verwerfen, sollten Informationen über einen längeren Zeitraum gesammelt werden. Anstelle eines einzigen Referenzwertes sollten also viele, über einen längeren Zeitraum gewonnene Referenzwerte betrachtet werden. Daher sollte die Selbstlernphase wiederholt gestartet und alle gewonnenen Referenzwerte als Grundlage zur Beurteilung der Qualität eines Referenzwertes genutzt werden.

Die mit der Erfindung erzielten Vorteile bestehen insbesondere darin, dass "Ausreißer" unter den Referenzwerten, die durch untypische Fahrweisen oder Sensorausfälle verursacht werden können, durch den Vergleich mit weiteren Referenzwerten leicht als Ausreißer erkannt werden können. Wegen der Betrachtung eines längeren Selbstlernzeitraumes und vieler Referenzwerte ist zudem der Fehler des Referenzwerts kleiner. Vom Referenzwert abweichende Werte, die auf Ereignisse hindeuten, die vom typischen Betriebsverhalten abweichen, können daher mit größerer Genauigkeit identifiziert werden und die Gefahr, dass ein solches Ereignis übersehen wird, sinkt. Zu Beginn der Analyse wird dadurch Zeit gewonnen, dass erste Referenzwerte nicht verworfen werden, sondern sofort nach der ersten Selbstlernphase zur Verfügung stehen.

Ein weiterer wichtiger Vorteil liegt darin, dass wertvolle Informationen über das Langzeitverhalten einer Maschine gewonnen werden. Die große Anzahl zur Verfügung stehende Referenzwerte, die zusätzlich noch mit einer zeitlichen Information versehen sind, erlaubt die Durchführung von Trenduntersuchungen, aus denen wertvolle Erkenntnisse nicht nur über die einzelne Maschine, sondern sogar über die gesamte Flotte gewonnen werden können.

## Patentansprüche

1. Verfahren zur Validierung von Referenzwerten in einem Analysesystem, bei dem die Referenzwerte in einer Selbstlernphase des Systems ermittelt werden, wobei die Selbstlernphase wiederholt durchgeführt wird und alle ermittelten Referenzwerte zur Beurteilung der Qualität eines Referenzwertes herangezogen werden.
